# EUROPEAN PATENT APPLICATION

(11) **EP 4 769 616 A1**
(43) Date of publication of application: **01.07.2026**
(21) Application number: 25217855.3
(22) Date of filing: 21.11.2025
(51) Int. Cl.: H01M 10/0562, H01M 10/052, H01M 10/0525

(54) **OXYCHLORIDE SOLID-STATE ELECTROLYTE, AND PREPARATION METHOD AND USE THEREOF**

(30) Priority: 26.12.2024 CN 202411948824
(71) Applicant: University of Science and Technology of China, Hefei Anhui 230026 (CN)
(72) Inventor: MA, Cheng, Hefei, 230026 (CN); HU, Lv, Hefei, 230026 (CN)
(74) Representative: Bayramoglu et al.

(57) **Abstract**

The present invention provides an oxychloride solid-state electrolyte, and a preparation method and use thereof and belongs to the technical field of all-solid-state lithium battery materials. The oxychloride solid-state electrolyte is represented by a chemical formula of xLi₂O-(1-y)ZrCl₄-yAlCl₃, wherein 0<x≤3, and 0<y≤1. Compared with other solid-state electrolytes such as sulfides, halides, and oxides (most of which exhibits a Young's modulus greater than 20 GPa, and even greater than 100 GPa), the oxychloride solid-state electrolyte of the present invention exhibits a significantly lower Young's modulus (no greater than 4 GPa). All-solid-state lithium batteries assembled with the oxychloride solid-state electrolyte of the present invention exhibit superior areal capacity and long cycle stability.

## Description

### TECHNICAL FIELD

The present invention relates to the technical field of all-solid-state lithium battery materials, and particularly, to an oxychloride solid-state electrolyte, and a preparation method and use thereof.

### BACKGROUND

As a next-generation energy storage technology, the use of all-solid-state lithium batteries is expected to overcome the inherent safety and energy density limitations of conventional lithium-ion batteries. As a key component of solid-state batteries, currently, no single solid-state electrolyte can satisfy all of the essential requirements for commercial application, including high ionic conductivity, good mechanical deformability, and cost-effectiveness. Due to the lack of such key properties, previously reported inorganic solid-state electrolytes suffer from challenges including slow ion transport efficiency, poor electrode interface contact, and high production costs, severely impeding the practical application of the inorganic solid-state electrolytes in all-solid-state lithium batteries.

Unlike conventional lithium-ion batteries, a liquid electrolyte is capable of readily permeating the electrodes to provide sufficient ionic conductivity, while solid-state batteries must rely on solid-solid contact between electrolyte particles to establish an ionic percolation network within the electrode. To form effective solid-solid contact with brittle commercial cathode active material particles, such as high-nickel ternary oxides and lithium iron phosphate under pressure, the solid electrolyte must possess a Young's modulus as low as possible. However, as brittle materials, oxide electrolytes generally exhibit a Young's modulus in excess of 100 GPa (e.g., Li_{0.33}La_{0.56}TiO₃: -200 GPa; Li₇La₃Zr2O₁₂ -156 GPa; Li_{1.5}Al_{0.5}Ge_{1.5}P₃O₁₂: -115 GPa and are consequently unable to satisfy the foregoing requirement. In comparison, sulfides and chlorides, despite exhibiting some mechanical workability, demonstrate suboptimal mechanical properties. For example, representative sulfide electrolytes Li₆PS₅Cl and Li₁₀GeP₂S₁₂ exhibit Young's modulus values of 25.2 GPa and 26.7 GPa, respectively, while representative chloride electrolytes Li₃YCl₆, Li₂ZrCl₆, and Li₃InCl₆ demonstrate Young's modulus values of 45.75 GPa, 22.5 GPa, and 19.8 GPa, respectively. However, to achieve effective solid-solid contact, solid-state electrolytes require a Young's modulus below 10 GPa (ACS Appl. Energy Mater. 2023, 6, 9615-9623). In addition to an extremely low Young's modulus, the solid-state electrolyte must further possess a sufficiently high ionic conductivity (greater than 1 mS·cm⁻¹ at 25°C) and must not be formed using expensive compounds such as Li₂S or rare earth chlorides as raw materials (which would otherwise render commercialization unviable due to prohibitively high costs). However, no inorganic solid-state electrolyte that simultaneously meets all the above requirements currently exists. In particular, solid-state electrolytes with a Young's modulus below 10 GPa are particularly scarce.

Therefore, it is critical to provide an oxychloride solid-state electrolyte possessing an extremely low Young's modulus, high ionic conductivity, and low cost.

### SUMMARY

An objective of the present invention is to provide an oxychloride solid-state electrolyte, and a preparation method and use thereof, so as to solve the technical problems in the prior art of being unable to simultaneously satisfy the requirements of a low Young's modulus and a high ionic conductivity, as well as the issue of high manufacturing costs.

To achieve the above objective, the present invention provides the following technical solution.

The present invention provides an oxychloride solid-state electrolyte, wherein the oxychloride solid-state electrolyte is represented by a chemical formula of xLi₂O-(1-y)ZrCl₄-yAlCl₃, where 0<x≤3, and 0<y≤1.

Further, the oxychloride solid-state electrolyte includes an amorphous phase and a crystalline phase, wherein the crystalline phase is present in an amount of ≤ 20%, a crystal system of the crystalline phase is trigonal and/or monoclinic, and a space group of the crystalline phase is *P*3*m*1 and/or C2/m.

The present invention provides a preparation method of the oxychloride solid-state electrolyte, including the following steps:
mixing Li₂O, ZrCl₄ and AlCl₃, followed by high-energy ball milling, thereby obtaining the oxychloride solid-state electrolyte.

Further, a molar ratio of the Li₂O, ZrCl₄ and AlCl₃ is 0.5 to 2:0.4 to 0.9:0.1 to 0.6.

Further, the mixing is performed for a duration of 20 min to 40 min.

Further, a ball-to-powder ratio for the high-energy ball milling is 10 to 45:1, a rotational speed for the high-energy ball milling is 150 rpm to 550 rpm, and a duration for the high-energy ball milling is 2 h to 40 h.

The present invention further provides use of the oxychloride solid-state electrolyte in an all-solid-state lithium battery.

Beneficial effects of the present invention are as follows:
1) The highly amorphous *x*Li₂O-(1-*y*)ZrCl₄-*y*AlCl₃ oxychloride solid-state electrolyte prepared according to the present invention exhibits advantages, including a low Young's modulus (less than 4 GPa, substantially lower than that (raning from10 GPa to 100 GPa) of most other solid electrolytes, a high ionic conductivity (greater than 1 mS·cm⁻¹ at 25°C), and without requiring expensive compounds as raw materials;
2) The *x*Li₂O-(1-*y*)ZrCl₄-*y*AlCl oxychloride solid-state electrolyte prepared according to the present invention features an anionic framework constituted by Zr-O/Cl and/or Al-O/Cl polyhedra interconnected via optimal corner-sharing of respective O/Cl vertices, exhibiting a Young's modulus as low as 1.41 GPa and an ionic conductivity as high as 2.55 mS·cm⁻¹ at room temperature. Thus, a high-voltage all-solid-state battery employing the *x*Li₂O-(1-*y*)ZrCl₄-*y*AlCl oxychloride solid-state electrolyte in combination with a high-nickel cathode (LiNi_{0.92}Co_{0.06}Mn_{0.02}O₂, abbreviated as scNCM92) demonstrates excellent electrochemical performance (maintaining a capacity retention of at least 80% after over 4,000 cycles); and
3) The synthesis of the *x*Li₂O-(1-*y*)ZrCl₄-*y*AlCl oxychloride solid-state electrolyte prepared according to the present invention does not require expensive raw materials such as Li₂S and/or rare earth compounds, thereby providing a substantial cost advantage and promising commercial prospects.

### BRIEF DESCRIPTION OF THE DRAWINGS

FIG. 1 shows an X-ray diffraction pattern of 1.0Li₂O-0.8ZrCl₄-0.2AlCl₃ prepared in Example 1;
FIG. 2 shows an electrochemical impedance spectrum of 1.0Li₂O-0.8ZrCl₄-0.2AlCl₃ prepared in Example 1;
FIG. 3 shows a direct current polarization plot of 1.0Li₂O-0.8ZrCl₄-0.2AlCl₃ prepared in Example 1
FIG. 4 shows a Young's modulus distribution map of 1.0Li₂O-0.8ZrCl₄-0.2AlCl₃ prepared in Example 1;
FIG. 5 shows an X-ray diffraction pattern of 1.8Li₂O-0.8ZrCl₄-0.2AlCl₃ prepared in Example 2;
FIG. 6 shows an electrochemical impedance spectrum of 1.8Li₂O-0.8ZrCl₄-0.2AlCl₃ prepared in Example 2;
FIG. 7 shows a direct current polarization plot of 1.8Li₂O-0.8ZrCl₄-0.2AlCl₃ prepared in Example 2;
FIG. 8 shows a Young's modulus distribution map of 1.8Li₂O-0.8ZrCl₄-0.2AlCl₃ prepared in Example 2;
FIG. 9 shows an X-ray diffraction pattern of 1.0Li₂O-0.75ZrCl₄-0.25AlCl₃ prepared in Example 3;
FIG. 10 shows an electrochemical impedance spectrum of 1.0Li₂O-0.75ZrCl₄-0.25AlCl₃ prepared in Example 3;
FIG. 11 shows a direct current polarization plot of 1.0Li₂O-0.75ZrCl₄-0.25AlCl₃ prepared in Example 3;
FIG. 12 shows an X-ray diffraction pattern of 1.4Li₂O-0.75ZrCl₄-0.25AlCl₃ prepared in Example 4;
FIG. 13 shows an electrochemical impedance spectrum of 1.4Li₂O-0.75ZrCl₄-0.25AlCl₃ prepared in Example 4;
FIG. 14 shows a direct current polarization plot of 1.4Li₂O-0.75ZrCl₄-0.25AlCl₃ prepared in Example 4;
FIG. 15 shows a Young's modulus distribution map of 1.4Li₂O-0.75ZrCl₄-0.25AlCl₃ prepared in Example 4;
FIG. 16 shows a long-term cycling performance plot of a Li-In|Li₆PS₅Cl-1.4Li₂O-0.75ZrCl₄-0.25AlCl₃|scNCM92 battery assembled with 1.4Li₂O-0.75ZrCl₄-0.25AlCl₃ prepared in Example 4, tested at a rate of 10C (2000 mA·g⁻¹);
FIG. 17 shows (a) long-term cycling performance and (b) corresponding charge-discharge profiles of a Li-In|LisPS₆Cl-1.4Li₂O-0.75ZrCl₄-0.25AlCl₃|scNCM92 battery assembled with the 1.4Li₂O-0.75ZrCl₄-0.25AlCl₃ prepared in Example 4, tested at a rate of 0.1C (20 mA·g⁻¹) under a high active material loading;
FIG. 18 shows an X-ray diffraction pattern of 1.8Li₂O-0.75ZrCl₄-0.25AlCl₃ prepared in Example 5;
FIG. 19 shows an electrochemical impedance spectrum of 1.8Li₂O-0.75ZrCl₄-0.25AlCl₃ prepared in Example 5;
FIG. 20 shows a direct current polarization plot of 1.8Li₂O-0.75ZrCl₄-0.25AlCl₃ prepared in Example 5;
FIG. 21 shows an X-ray diffraction pattern of 1.0Li₂O-0.7ZrCl₄-0.3AlCl₃ prepared in Example 6;
FIG. 22 shows an electrochemical impedance spectrum of 1.0Li₂O-0.7ZrCl₄-0.3AlCl₃ prepared in Example 6;
FIG. 23 shows a direct current polarization plot of 1.0Li₂O-0.7ZrCl₄-0.3AlCl₃ prepared in Example 6;
FIG. 24 shows a Young's modulus distribution map of 1.0Li₂O-0.7ZrCl₄-0.3AlCl₃ prepared in Example 6;
FIG. 25 shows an X-ray diffraction pattern of 1.0Li₂O-0.5ZrCl₄-0.5AlCl₃ prepared in Example 7;
FIG. 26 shows an electrochemical impedance spectrum of 1.0Li₂O-0.5ZrCl₄-0.5AlCl₃ prepared in Example 7;
FIG. 27 shows a direct current polarization plot of 1.0Li₂O-0.5ZrCl₄-0.5AlCl₃ prepared in Example 7;
FIG. 28 shows a Young's modulus distribution map of 1.0Li₂O-0.5ZrCl₄-0.5AlCl₃ prepared in Example 7;
FIG. 29 shows an X-ray diffraction pattern of 1.8Li₂O-0.5ZrCl₄-0.5AlCl₃ prepared in Example 8;
FIG. 30 shows an electrochemical impedance spectrum of 1.8Li₂O-0.5ZrCl₄-0.5AlCl₃ prepared in Example 8;
FIG. 31 shows a direct current polarization plot of 1.8Li₂O-0.5ZrCl₄-0.5AlCl₃ prepared in Example 8; and
FIG. 32 shows a Young's modulus distribution map of 1.8Li₂O-0.5ZrCl₄-0.5AlCl₃ prepared in Example 8.

### DETAILED DESCRIPTION OF THE EMBODIMENTS

The present invention provieds an oxychloride solid-state electrolyte, wherein the oxychloride solid-state electrolyte is represented by a chemical formula of xLi₂O-(1-y)ZrCl₄-yAlCl₃, where 0<x≤3, and 0<y≤1, preferably 0.5<x≤2, and 0.1<y≤0.6, and more preferably 1≤x≤1.8 and 0.2≤y≤0.5.

In the present invention, the oxychloride solid-state electrolyte comprises an amorphous phase and a crystalline phase, wherein the crystalline phase is present in an amount of ≤ 20%, preferably ≤ 15%, and more preferably ≤ 10%; a crystal system of the crystalline phase is trigonal and/or monoclinic; and a space group is *P*3*m*1 and/or C2/m.

The present invention provides a preparation method of the oxychloride solid-state electrolyte, including the following steps:
Li₂O, ZrCl₄ and AlCl₃ are mixed and then subjected to high-energy ball milling, to obtain the oxychloride solid-state electrolyte.

In the present invention, a molar ratio of the Li₂O, ZrCl₄ and AlCl₃ is 0.5 to 2:0.4 to 0.9:0.1 to 0.6, preferably 0.7 to 1.9:0.45 to 0.85:0.15 to 0.55, and more preferably 1 to 1.8:0.5 to 0.8:0.2 to 0.5.

In the present invention, the mixing is performed for a duration of 20 min to 40 min, preferably 25 min to 35 min, and more preferably 30 min.

In the present invention, a ball-to-powder ratio for the high-energy ball milling is 10 to 45:1, preferably 15 to 40:1, and more preferably 20 to 25:1; a rotational speed for the high-energy ball milling is 150 rpm to 550 rpm, preferably 250 rpm to500 rpm, and more preferably 500 rpm; and a duration for the high-energy ball milling is 2 h to 40 h, preferably 5 h to 30 h, and more preferably 20 h to 30 h.

The present invention further provides use of the oxychloride solid-state electrolyte in an all-solid-state lithium battery.

The technical solution provided by the present invention is described in detail below in conjunction with examples, however, the examples are not to be construed as limiting the scope of protection of the present invention.

### Example 1

In an argon-filled glove box (with water and oxygen contents each less than 0.01 ppm), Li₂O, ZrCl₄, and AlCl₃ in a molar ratio of 1:0.8:0.2 are mixed in an agate mortar for 30 min to obtain a mixture. After the mixing is completed, the mixture is transferred into an 80 mL zirconia ball milling jar, wherein a diameter of the zirconia ball milling jar is 5 mm, and A ball-to-powder weight ratio is 20:1. The mixture is subjected to high-energy ball milling at a rotational speed of 500 rpm in a Pulverisette 7 high-energy planetary ball mill (Fritsch GmbH, Germany), the high-energy ball milling is performed for 30 h, and then an oxychloride solid-state electrolyte represented by 1.0Li₂O-0.8ZrCl₄-0.2AlCl₃ with a crystalline phase content ≤20% is obtained, wherein the crystal phase is a monoclinic crystal system, with a space group of *C2*/*m.*

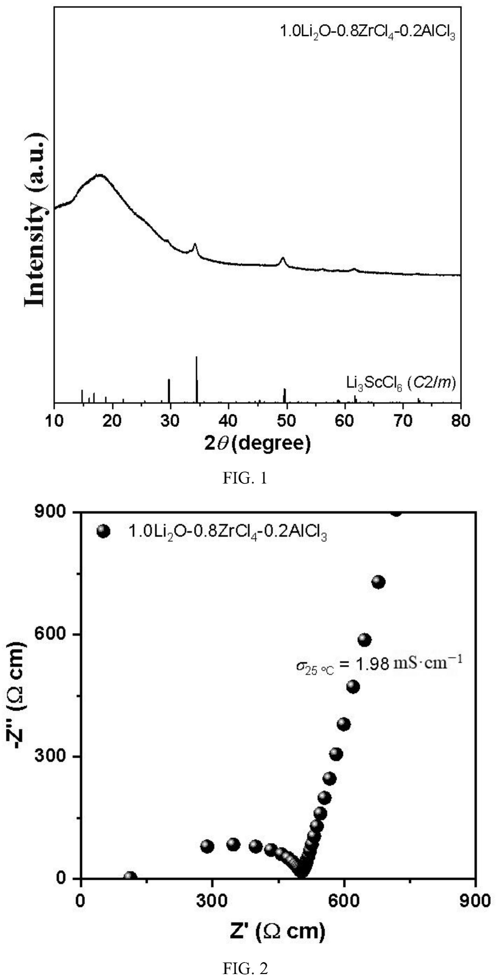

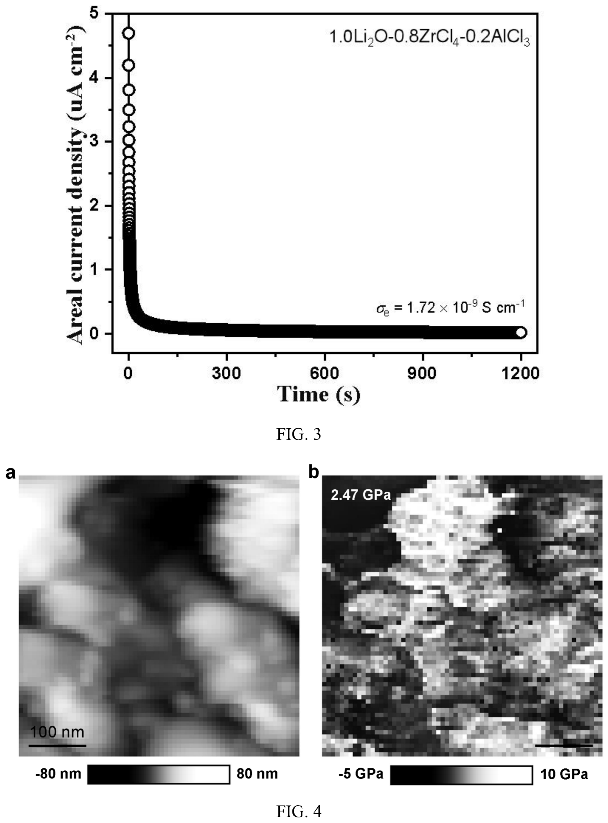

The X-ray diffraction pattern, electrochemical impedance spectrum, direct current polarization plot, and Young's modulus distribution map of the oxychloride solid-state electrolyte prepared according to Example 1 are tested, and the test results are illustrated in FIGS. 1-4, respectively. As shown in FIGS. 1-4, the oxychloride solid-state electrolyte prepared in Example 1 exhibits a room-temperature ionic conductivity (σᵢ) of 1.98 mS·cm⁻¹ and a room-temperature electronic conductivity (σₑ) of 1.72 × 10⁻⁹ S·cm⁻¹. The fact that the ionic conductivity is six orders of magnitude higher than the electronic conductivity demonstrates that the oxychloride solid-state electrolyte 1.0Li₂O-0.8ZrCl₄-0.2AlCl₃ is suitable for use as a predominantly ionic conductor in solid-state batteries. Additionally, the Young's modulus of 1.0Li₂O-0.8ZrCl₄-0.2AlCl₃ is 2.47 GPa, indicating that the electrolyte exhibits excellent mechanical deformability.

### Example 2

In Example 2, the molar ratio of Li₂O: ZrCl₄: AlCl₃ is 1.8: 0.8: 0.2, while all other conditions are identical to those in Example 1. An oxychloride solid-state electrolyte represented by 1.8Li₂O-0.8ZrCl₄-0.2AlCl₃ with a crystalline phase content ≤20% is obtained, wherein the crystal phase is a monoclinic crystal system, with a space group of *C2*/*m.*

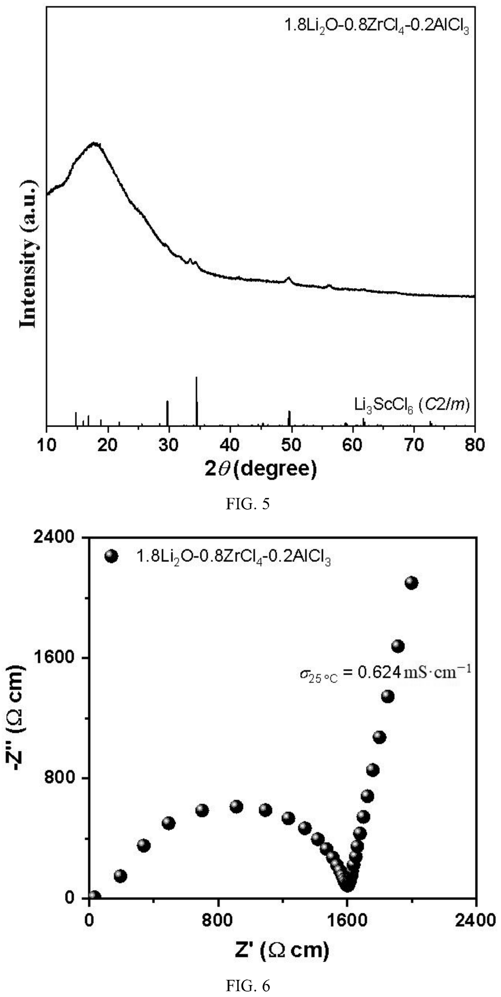

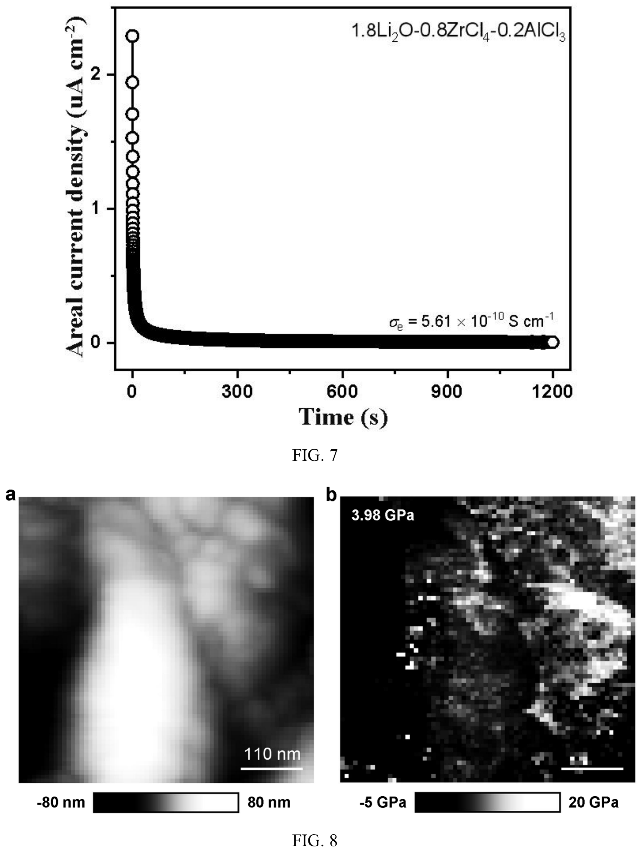

The X-ray diffraction pattern, electrochemical impedance spectrum, direct current polarization plot, and Young's modulus distribution map of the oxychloride solid-state electrolyte prepared according to Example 2 are tested, and the test results are illustrated in FIGS. 5-8, respectively. As shown in FIGS. 5-8, the oxychloride solid-state electrolyte prepared in Example 2 exhibits a room-temperature ionic conductivity (σᵢ) of 0.624 mS·cm⁻¹ and a room-temperature electronic conductivity (σₑ) of 5.61 × 10⁻¹⁰ S·cm⁻¹. The fact that the ionic conductivity is six orders of magnitude higher than the electronic conductivity demonstrates that the oxychloride solid-state electrolyte 1.8Li₂O-0.8ZrCl₄-0.2AlCl₃ is suitable for use as a predominantly ionic conductor in solid-state batteries. Additionally, the Young's modulus of 1.8Li₂O-0.8ZrCl₄-0.2AlCl₃ is 3.98 GPa, indicating that the electrolyte exhibits excellent mechanical deformability.

### Example 3

In Example 3, the molar ratio of Li₂O: ZrCl₄: AlCl₃ is 1.0: 0.75: 0.25, while all other conditions are identical to those in Example 1. An oxychloride solid-state electrolyte represented by 1.0Li₂O-0.75ZrCl₄-0.25AlCl₃ with a crystalline phase content ≤20% is obtained, wherein the crystal phase is a trigonal crystal system, with a space group of *P*3*m*1*.*

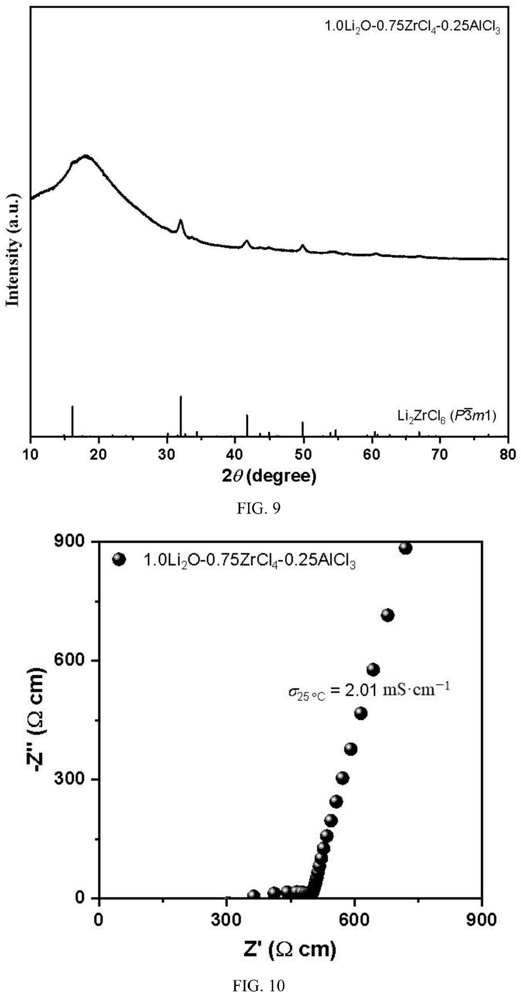

The X-ray diffraction pattern, electrochemical impedance spectrum, and direct current polarization plot of the oxychloride solid-state electrolyte prepared according to Example 3 are tested, and the test results are illustrated in FIGS. 9-11, respectively. As shown in FIGS. 9-11, the oxychloride solid-state electrolyte prepared in Example 3 exhibits a room-temperature ionic conductivity (σᵢ) of 2.01 mS·cm⁻¹ and a room-temperature electronic conductivity (σₑ) of 2.7 × 10⁻⁹ S·cm⁻¹. The fact that the ionic conductivity is five orders of magnitude higher than the electronic conductivity demonstrates that the oxychloride solid-state electrolyte 1.0Li₂O-0.75ZrCl₄-0.25AlCl₃ is suitable for use as a predominantly ionic conductor in solid-state batteries.

### Example 4

In Example 4, the molar ratio of Li₂O: ZrCl₄: AlCl₃ is 1.4: 0.75: 0.25, while all other conditions are identical to those in Example 1. An oxychloride solid-state electrolyte represented by 1.4Li₂O-0.75ZrCl₄-0.25AlCl₃ with a crystalline phase content ≤20% is obtained, wherein the crystal phase comprises a coexistence of a trigonal crystal system and a monoclinic crystal system, with a space group of *P3̅m*1 and *C2*/*m.*

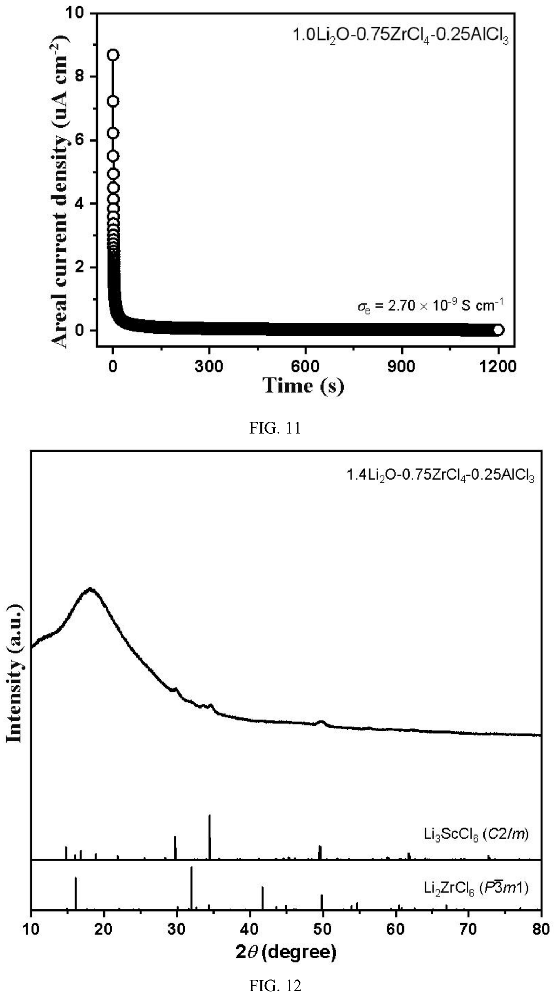

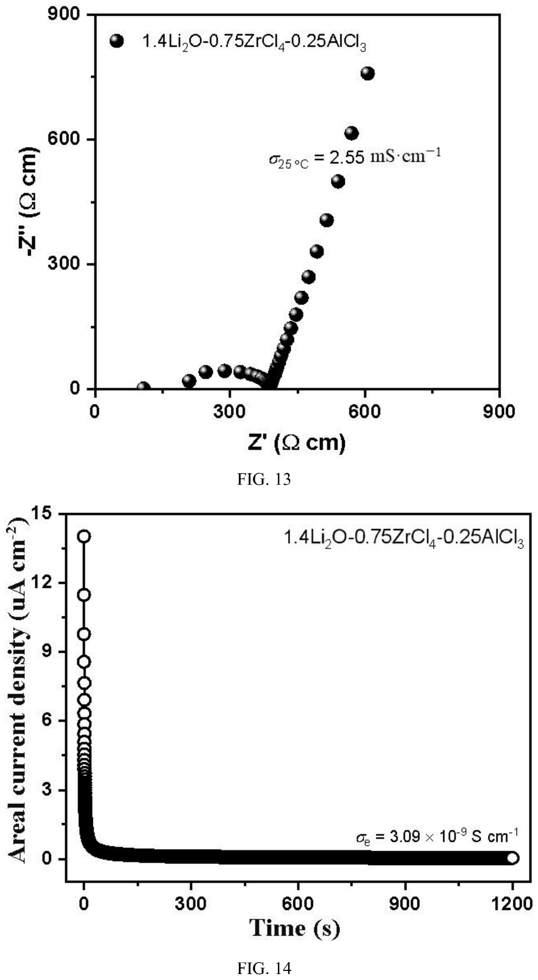

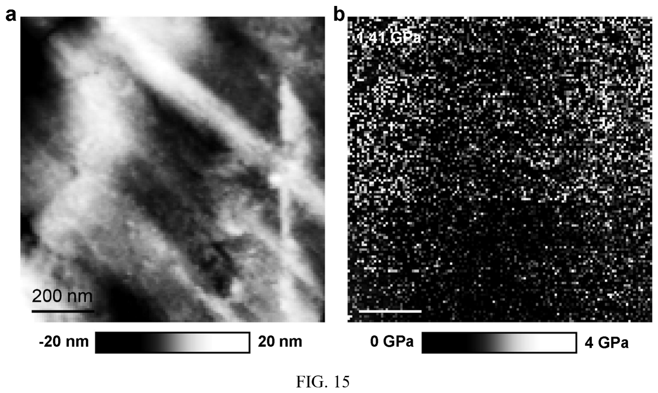

The X-ray diffraction pattern, electrochemical impedance spectrum, and direct current polarization plot of the oxychloride solid-state electrolyte prepared according to Example 4 are tested, and the test results are illustrated in FIGS. 12-15, respectively. As shown in FIGS. 12-15, the oxychloride solid-state electrolyte prepared in Example 4 exhibits a room-temperature ionic conductivity (σi) of 2.55 mS·cm⁻¹ and a room-temperature electronic conductivity (σₑ) of 3.09 × 10⁻⁹ S·cm⁻¹. The fact that the ionic conductivity is five orders of magnitude higher than the electronic conductivity demonstrates that the oxychloride solid-state electrolyte 1.4Li₂O-0.75ZrCl₄-0.25AlCl₃ is suitable for use as a predominantly ionic conductor in solid-state batteries. Additionally, the Young's modulus of 1.4Li₂O-0.75ZrCl₄-0.25AlCl₃ is 1.41 GPa, indicating that the electrolyte exhibits excellent mechanical deformability.

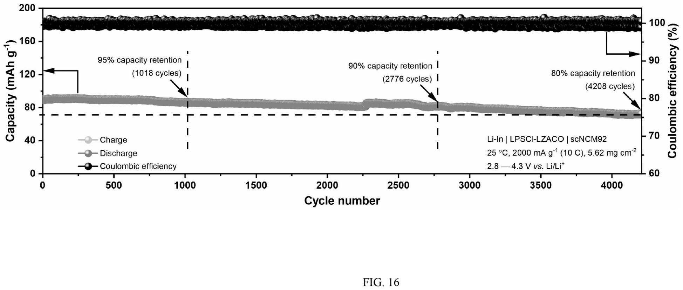

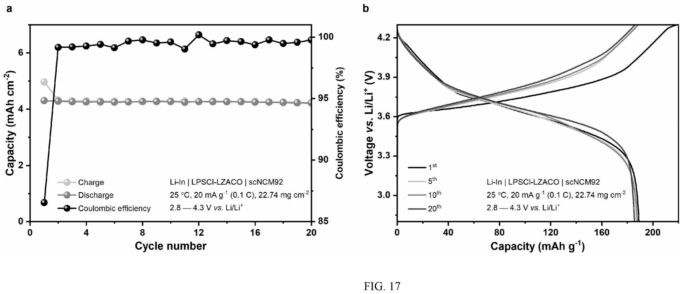

An all-solid-state lithium battery is assembled in an argon-filled glovebox (with water and oxygen contents each less than 0.01 ppm). A composite positive electrode is prepared by mixing single-crystal LiNi_{0.92}Co_{0.06}Mn_{0.02}O₂ with the oxychloride solid-state electrolyte 1.4Li₂O-0.75ZrCl₄-0.25AlCl₃ prepared in Example 4 at a mass ratio of 75:25 , followed by homogenization in a vortex mixer at 1,500 rpm for 15 min. Assembling the all-solid-state lithium battery includes the following steps: initially, 25 mg of 1.4Li₂O-0.75ZrCl₄-0.25AlCl₃ powder is cold-pressed under a pressure of 150 MPa in a PEEK die with a diameter of 10 mm, wherein the pressure is maintained for 1 minute; subsequently, the composite cathode with a loading of 5-30 mg cm⁻² is dispersed on one side of a 1.4Li₂O-0.75ZrCl₄-0.25AlCl₃ layer, and the resultant structure is maintained under a pressure of 300 MPa for 5 minutes; then, to prevent a side reaction between the oxychloride solid-state electrolyte 1.4Li₂O-0.75ZrCl₄-0.25AlCl₃ and the negative electrode, 35 mg of sulfide Li₆PS₅Cl powder is uniformly dispersed onto the other side of the 1.4Li₂O-0.75ZrCl₄-0.25AlCl₃ layer, and the layered structure is then pressed under a pressure of 150 MPa for 1 minute; ultimately, the negative electrode Li-In is compacted against the Li₆PS₅Cl side, and an external pressure of 190 MPa is applied to the entire battery. The assembled all-solid-state lithium battery is tested, with the results shown in FIGS. 16-17. As demonstrated in FIGS. 16-17, with a conventional cathode active material loading of 5-6 mg·cm⁻², the all-solid-state battery exhibits a high capacity retention rate of 80% after 4,208 cycles at 10 C (2,000 mA·g⁻¹); and When the positive electrode active material loading exceeds 20 mg·cm⁻², the all-solid-state battery achieves an areal capacity of 4.22 mAh·cm⁻² with a capacity retention of 98.18% after 20 cycles at 0.1C (20 mA g⁻¹) (exhibiting a capacity retention of 98.18%).

### Example 5

In Example 5, the molar ratio of Li₂O: ZrCl₄: AlCl₃ is 1.8: 0.75: 0.25, while all other conditions are identical to those in Example 1. An oxychloride solid-state electrolyte represented by 1.8Li₂O-0.75ZrCl₄-0.25AlCl₃ with a crystalline phase content ≤20% is obtained, wherein the crystal phase is a monoclinic crystal system, with a space group of *C2*/*m.*

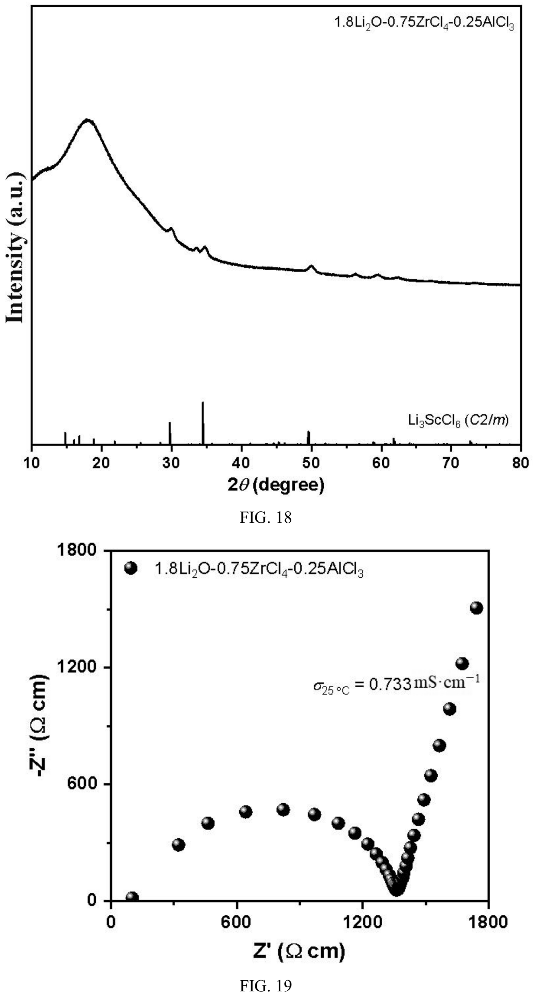

The X-ray diffraction pattern, electrochemical impedance spectrum, and direct current polarization plot of the oxychloride solid-state electrolyte prepared according to Example 5 are tested, and the test results are illustrated in FIGS. 18-20, respectively. As shown in FIGS. 18-20, the oxychloride solid-state electrolyte prepared in Example 5 exhibits a room-temperature ionic conductivity (σᵢ) of 0.733 mS·cm⁻¹ and a room-temperature electronic conductivity (σₑ) of 1.22 × 10⁻⁹ S·cm⁻¹. The fact that the ionic conductivity is five orders of magnitude higher than the electronic conductivity demonstrates that the oxychloride solid-state electrolyte 1.8Li₂O-0.75ZrCl₄-0.25AlCl₃ is suitable for use as a predominantly ionic conductor in solid-state batteries.

### Example 6

In Example 6, the molar ratio of Li₂O: ZrCl₄: AlCl₃ is 1.0: 0.7: 0.3, while all other conditions are identical to those in Example 1. An oxychloride solid-state electrolyte represented by 1.0Li₂O-0.7ZrCl₄-0.3AlCl₃ with a crystalline phase content ≤20% is obtained, wherein the crystal phase is a trigonal crystal system, with a space group of *P*3̅*m*1*.*

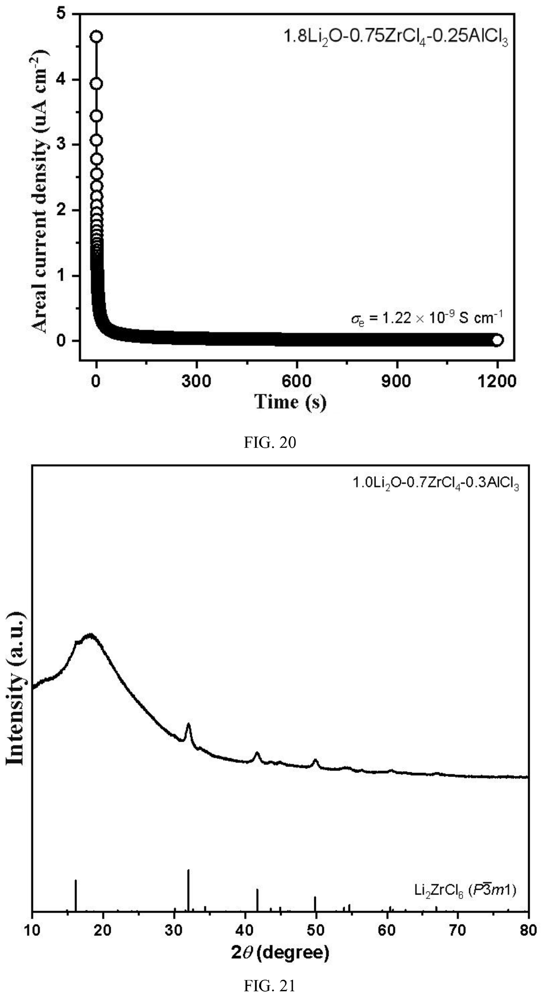

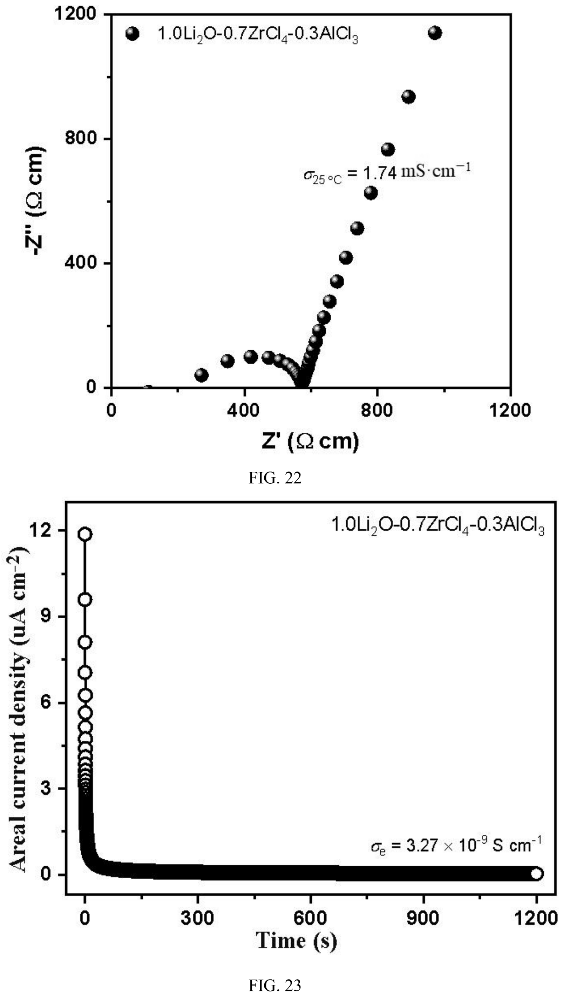

The X-ray diffraction pattern, electrochemical impedance spectrum, and direct current polarization plot of the oxychloride solid-state electrolyte prepared according to Example 6 are tested, and the test results are illustrated in FIGS. 21-24, respectively. As shown in FIGS. 21-24, the oxychloride solid-state electrolyte prepared in Example 6 exhibits a room-temperature ionic conductivity (σᵢ) of 1.74 mS·cm⁻¹ and a room-temperature electronic conductivity (σₑ) of 3.27 × 10⁻⁹ S·cm⁻¹. The fact that the ionic conductivity is five orders of magnitude higher than the electronic conductivity demonstrates that the oxychloride solid-state electrolyte 1.0Li₂O-0.7ZrCl₄-0.3AlCl₃ is suitable for use as a predominantly ionic conductor in solid-state batteries. Additionally, the Young's modulus of 1.0Li₂O-0.7ZrCl₄-0.3AlCl₃ is 3.65 GPa, indicating that the electrolyte exhibits excellent mechanical deformability.

### Example 7

In Example 7, the molar ratio of Li₂O: ZrCl₄: AlCl₃ is 1.0: 0.5: 0.5, while all other conditions are identical to those in Example 1. An oxychloride solid-state electrolyte represented by 1.0Li₂O-0.5ZrCl₄-0.5AlCl₃ with a crystalline phase content ≤20% is obtained, wherein the crystal phase is a trigonal crystal system, with a space group of *P*3̅*m*1*.*

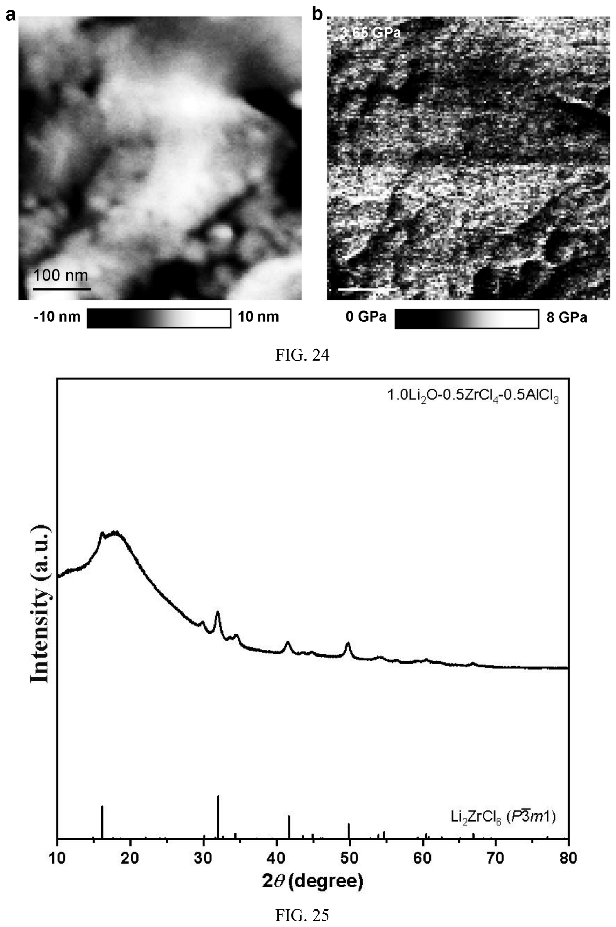

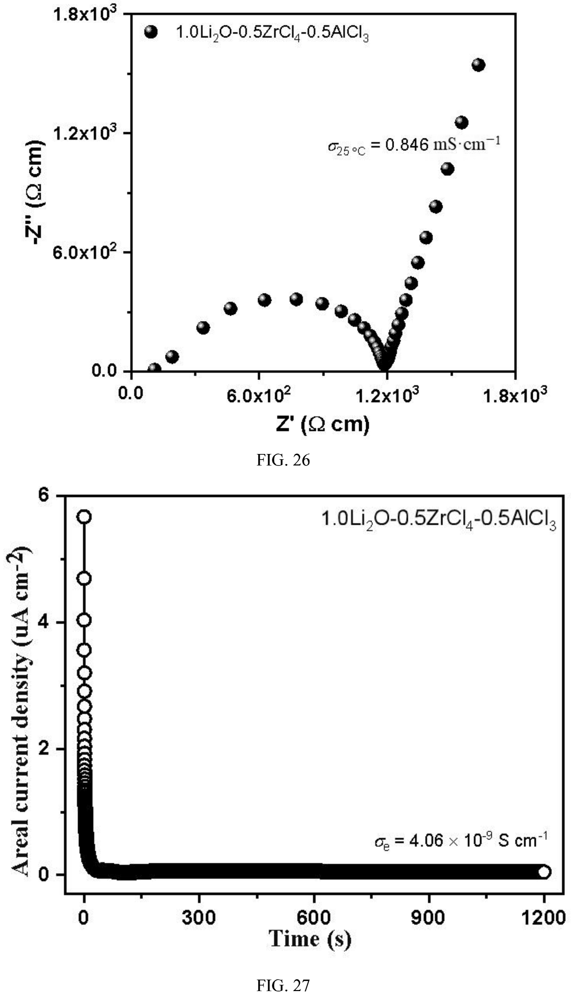

The X-ray diffraction pattern, electrochemical impedance spectrum, and direct current polarization plot of the oxychloride solid-state electrolyte prepared according to Example 7 are tested, and the test results are illustrated in FIGS. 25-28, respectively. As shown in FIGS. 25-28, the oxychloride solid-state electrolyte prepared in Example 7 exhibits a room-temperature ionic conductivity (σᵢ) of 0.846 mS·cm⁻¹ and a room-temperature electronic conductivity (σₑ) of 4.06 × 10⁻⁹ S·cm⁻¹. The fact that the ionic conductivity is five orders of magnitude higher than the electronic conductivity demonstrates that the oxychloride solid-state electrolyte 1.0Li₂O-0.5ZrCl₄-0.5AlCl₃ is suitable for use as a predominantly ionic conductor in solid-state batteries. Additionally, the Young's modulus of 1.0Li₂O-0.5ZrCl₄-0.5AlCl₃ is 3.01 GPa, indicating that the electrolyte exhibits excellent mechanical deformability.

### Example 8

In Example 8, the molar ratio of Li₂O: ZrCl₄: AlCl₃ is 1.8: 0.5: 0.5, while all other conditions are identical to those in Example 1. An oxychloride solid-state electrolyte represented by 1.8Li₂O-0.5ZrCl₄-0.5AlCl₃ with a crystalline phase content ≤20% is obtained, wherein the crystal phase is a monoclinic crystal system, with a space group of *C2*/*m.*

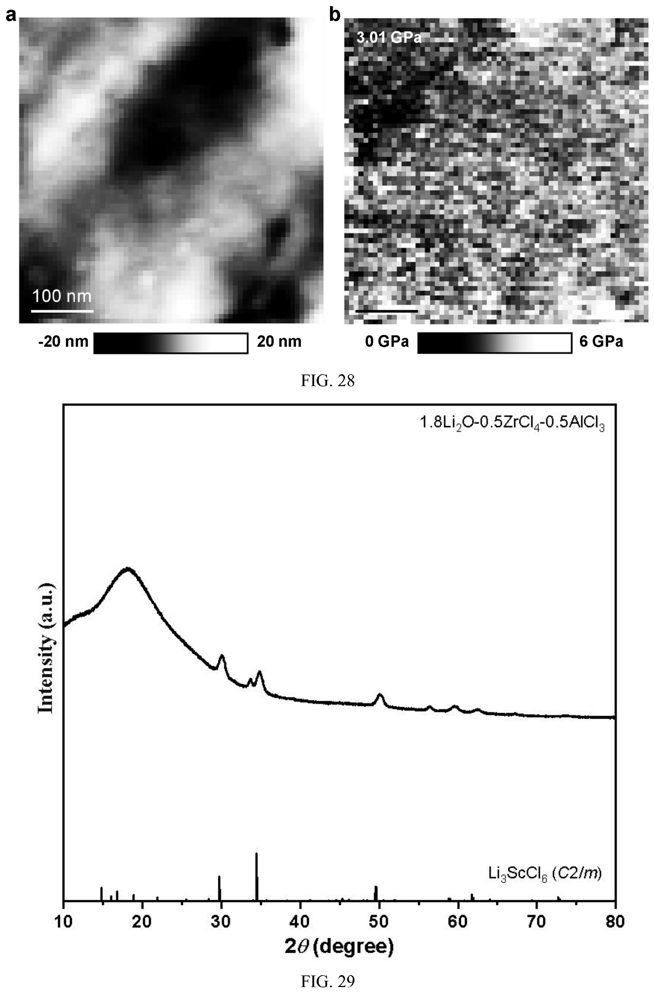

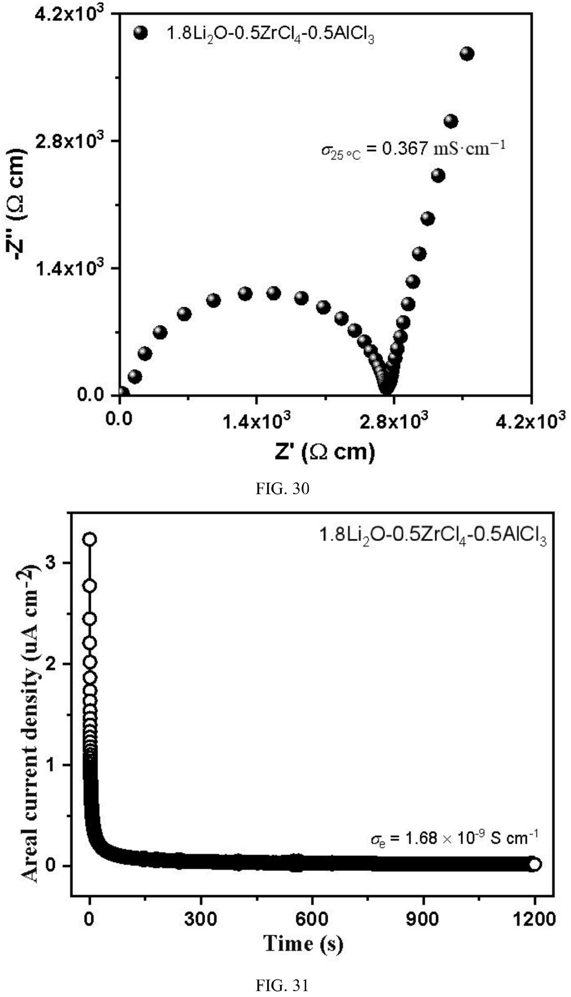

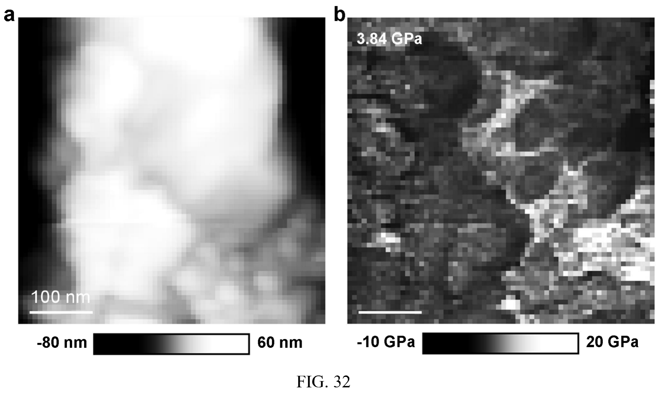

The X-ray diffraction pattern, electrochemical impedance spectrum, and direct current polarization plot of the oxychloride solid-state electrolyte prepared according to Example 8 are tested, and the test results are illustrated in FIGS. 29-32, respectively. As shown in FIGS. 29-32, the oxychloride solid-state electrolyte prepared in Example 8 exhibits a room-temperature ionic conductivity (σᵢ) of 0.367 mS-cm⁻¹ and a room-temperature electronic conductivity (σₑ) of 1.68 × 10⁻⁹ S·cm⁻¹. The fact that the ionic conductivity is five orders of magnitude higher than the electronic conductivity demonstrates that the oxychloride solid-state electrolyte 1.8Li₂O-0.5ZrCl₄-0.5AlCl₃ is suitable for use as a predominantly ionic conductor in solid-state batteries. Additionally, the Young's modulus of 1.8Li₂O-0.5ZrCl₄-0.5AlCl₃ is 3.84 GPa, indicating that the electrolyte exhibits excellent mechanical deformability.

As demonstrated by the foregoing examples, the present invention provides an oxychloride solid-state electrolyte, and a preparation method and use thereof, where a chemical formula of the oxychloride solid-state electrolyte is xLi₂O-(1-y)ZrCl₄-yAlCl₃, wherein 0<x≤3, and 0<y≤1. Compared with other solid-state electrolytes such as sulfides, halides, and oxides (most of which exhibits a Young's modulus greater than 20 GPa, and even greater than 100 GPa), the oxychloride solid-state electrolyte of the present invention exhibits a significantly lower Young's modulus (no greater than 4 GPa); and all-solid-state lithium batteries assembled with the oxychloride solid-state electrolyte of the present invention exhibit superior areal capacity and long cycle stability.

The foregoing descriptions are only preferred examples of the present invention. It is to be noted that, for those skilled in the art, various modifications and improvements may be made without departing from the scope and spirit of the present invention, and such modifications and improvements shall also be considered within the scope of protection of the present invention.

## Claims

1. An oxychloride solid-state electrolyte, **characterized in that** the oxychloride solid-state electrolyte is represented by a chemical formula of xLi₂O-(1-y)ZrCl₄-yAlCl₃, 0<x≤3, and 0<y≤1.

2. The oxychloride solid-state electrolyte according to claim 1, **characterized in that** the oxychloride solid-state electrolyte comprises an amorphous phase and a crystalline phase, wherein the crystalline phase is present in an amount of ≤ 20%, a crystal system of the crystalline phase is trigonal and/or monoclinic, and a space group of the crystalline phase is *P*3̅*m*1 and/or C2/m.

3. A preparation method of the oxychloride solid-state electrolyte according to claim 1 or claim 2, **characterized by** comprising the following steps:
mixing Li₂O, ZrCl₄ and AlCl₃, followed by high-energy ball milling, thereby obtaining the oxychloride solid-state electrolyte.

4. The preparation method of the oxychloride solid-state electrolyte according to claim 3, **characterized in that** a molar ratio of the Li₂O, ZrCl₄ and AlCl₃ is 0.5 to 2:0.4 to 0.9:0.1 to 0.6.

5. The preparation method of the oxychloride solid-state electrolyte according to claim 4, **characterized in that** the mixing is performed for a duration of 20 min to 40 min.

6. The preparation method of the oxychloride solid-state electrolyte according to claim 4 or claim 5, **characterized in that** a ball-to-powder ratio for the high-energy ball milling is 10 to 45:1, a rotational speed for the high-energy ball milling is 150 rpm to 550 rpm, and a duration for the high-energy ball milling is 2 h to 40 h.

7. A use of the oxychloride solid-state electrolyte according to claim 1 or claim 2 in an all-solid-state lithium battery.
